# EUROPEAN PATENT APPLICATION

(11) **EP 4 723 229 A1**
(43) Date of publication of application: **08.04.2026**
(21) Application number: 24815794.3
(22) Date of filing: 23.05.2024
(51) Int. Cl.: H01M 4/525, H01M 4/505, C01G 53/00, H01M 4/131, H01M 10/052, H01M 4/02

(54) **CATHODE ACTIVE MATERIAL FOR LITHIUM SECONDARY BATTERY, PREPARATION METHOD THEREFOR, LITHIUM SECONDARY BATTERY COMPRISING SAME**

(30) Priority: 26.05.2023 KR 20230068485
(71) Applicant: Posco Future M Co., Ltd., Pohang-si, Gyeongsangbuk-do 37918 (KR)
(72) Inventor: PARK, Jeonghyeon, Sejong 30002 (KR); LIM, Seokjae, Gumi-si, Gyeongsangbuk-do 39171 (KR); SEO, Sunghwa, Sejong 30002 (KR); KIM, Seong In, Sejong 30002 (KR); KIM, Jaehan, Gumi-si, Gyeongsangbuk-do 39171 (KR); CHOI, Kwonyoung, Sejong 30002 (KR)
(74) Representative: Meissner Bolte Partnerschaft mbB
(86) International application number: PCT/KR2024/007028
(87) International publication number: WO 2024/248418

(57) **Abstract**

The present invention relates to a positive electrode active material for a lithium secondary battery, which is a single-particle-type nickel-containing lithium transition metal oxide, wherein the content of nickel is from 50 mol% to 70 mol% based on the total moles of transition metals, wherein the lithium transition metal oxide comprises zirconium (Zr) and yttrium (Y) as grain-growth-promoting elements, and wherein the total content of Zr and Y is from 2,500 ppm to 5,200 ppm based on the weight of the lithium transition metal oxide.

## Description

### [Technical Field]

The present invention relates to a positive electrode active material for a lithium secondary battery, a method for manufacturing the same, and a lithium secondary battery including the same, and more particularly, to a single-particle-type positive electrode active material for a lithium secondary battery, a method for manufacturing the same, and a lithium secondary battery including the same.

### [Background]

A lithium secondary battery produces electrical energy through oxidation and reduction reactions that occur when lithium ions are inserted (intercalation) and deintercalated from active materials, while an organic or polymer electrolyte is charged between a positive electrode and a negative electrode composed of active materials capable of such lithium-ion insertion and deintercalation.

As the positive electrode active materials for lithium secondary batteries, lithium cobalt oxide (LiCoO₂), lithium nickel oxide (LiNiO₂), lithium manganese oxides (LiMnO₂ or LiMn₂O₄), and lithium iron phosphate compounds (LiFePO₄) have been used. Among these, lithium cobalt oxide (LiCoO₂) has been widely used as a high-voltage positive electrode active material due to its high operating voltage and excellent capacity characteristics. However, due to the rising cost and unstable supply of cobalt (Co), it has become difficult to use it on a large scale as a power source for applications such as electric vehicles, creating a need to develop alternative positive electrode active materials.

Accordingly, nickel-cobalt-manganese-based lithium composite transition metal oxides, in which a portion of cobalt (Co) is substituted with nickel (Ni) and manganese (Mn) (hereinafter simply referred to as "NCM-based lithium composite transition metal oxides"), have been developed. However, conventional NCM-based lithium composite transition metal oxides generally have a secondary particle structure in which primary particles are aggregated. Such secondary particles have a large specific surface area, low particle strength, and high content of lithium by-products, resulting in excessive gas generation and reduced stability during cell operation.

To overcome these issues, the development of single-particle-type positive electrode active materials, rather than conventional secondary particle types, has been pursued. However, to produce single particles, calcination is generally performed at higher temperatures compared to secondary particle fabrication, and during this process, over-sintering often occurs, causing structural defects in the layered crystal structure, which leads to deterioration of electrochemical properties such as capacity and output characteristics.

Furthermore, when the calcination temperature is lowered to suppress such over-sintering, the crystallite growth within single particles becomes insufficient, leading to reduced particle strength and degraded cycle life characteristics. Additionally, when the particle growth of single particles is insufficient, the rolling density of the electrode decreases, which in turn lowers the energy density of the electrode.

### [Detailed Description of the Invention]

### [Technical Problem]

Accordingly, an object of the present invention is to provide a positive electrode active material for a lithium secondary battery, a method for manufacturing the same, and a lithium secondary battery including the same, wherein the positive electrode active material is in the form of single particles having a reduced number of defects in the layered crystal structure, thereby exhibiting excellent electrochemical properties, and wherein the crystallite size is maximized to improve particle strength and cycle life characteristics, while the average particle diameter is increased to enhance the energy density of the electrode.

### [Technical Solution]

According to one embodiment of the present invention, there is provided a positive electrode active material for a lithium secondary battery, which is a single-particle-type nickel-containing lithium transition metal oxide, wherein the content of nickel is from 50 mol% to 70 mol% based on the total moles of transition metals, wherein the lithium transition metal oxide comprises zirconium (Zr) and yttrium (Y) as grain-growth-promoting elements, and wherein the total content of Zr and Y is from 2,500 ppm to 5,200 ppm based on the weight of the lithium transition metal oxide.

The content of Zr may be from 1,300 ppm to 2,800 ppm based on the weight of the lithium transition metal oxide.

The content of Y may be from 1,400 ppm to 2,400 ppm based on the weight of the lithium transition metal oxide.

The content of cobalt (Co) in the lithium transition metal oxide may be from 5 mol% to 20 mol% based on the total moles of transition metals.

The content of manganese (Mn) in the lithium transition metal oxide may be 10 mol% or more based on the total moles of transition metals.

The positive electrode active material for a lithium secondary battery may have a crystallite size of 200 nm or more.

The cation mixing ratio of nickel cations in a lithium layer of the lithium transition metal oxide may be 3.8% or less.

The positive electrode active material for a lithium secondary battery may have an average particle diameter (D50) of 3 µm or more.

The lithium transition metal oxide may be represented by the following Chemical Formula 1:

**[Chemical Formula 1]** Liₐ[NiₓCo_{y}Mn_{z}M_{1w1}M_{2w2}]O₂

wherein 0.8 ≤ a ≤ 1.2, 0.5 ≤ x ≤ 0.7, 0.05 ≤ y ≤ 0.2, 0.1 ≤ z ≤ 0.4, 0 < w₁ ≤ 0.05, 0 ≤ w₂ ≤ 0.1, and x + y + z + w₁ + w₂ = 1, M₁ is Zr and Y, and M₂ is one or more selected from B, Al, Mg, Ti, Nb, W, Sc, Si, V, Fe, Y, Mo, Ce, Hf, Ta, La, and Sr.

According to another embodiment of the present invention, there is provided a method for manufacturing a positive electrode active material for a lithium secondary battery, comprising: preparing a transition metal precursor containing nickel in an amount of 50 mol% to 70 mol% based on the total moles of transition metals; and forming a mixture comprising the transition metal precursor, a lithium raw material, a Zr raw material, and a Y raw material, followed by calcining the mixture at a temperature of 890°C to 950°C to form a single-particle-type lithium transition metal oxide.

The total content of Zr and Y in the formed lithium transition metal oxide may be from 2,500 ppm to 5,200 ppm based on the weight of the lithium transition metal oxide.

The content of Zr in the formed lithium transition metal oxide may be from 1,300 ppm to 2,800 ppm based on the weight of the lithium transition metal oxide.

The content of Y in the formed lithium transition metal oxide may be from 1,400 ppm to 2,400 ppm based on the weight of the lithium transition metal oxide.

The lithium raw material may be Li₂CO₃.

According to still another embodiment of the present invention, there is provided a positive electrode for a lithium secondary battery comprising the above-described positive electrode active material.

According to yet another embodiment of the present invention, there is provided a lithium secondary battery comprising the above-described positive electrode for a lithium secondary battery.

### [Effects of the Invention]

According to one embodiment of the present invention, the positive electrode active material for a lithium secondary battery includes zirconium (Zr) and yttrium (Y) as grain-growth-promoting elements, and by appropriately controlling their contents, the number of defects in the layered crystal structure can be reduced, thereby improving electrochemical characteristics. In addition, since the crystallite size of the positive electrode active material is maximized, particle strength and cycle life characteristics can be enhanced. Furthermore, as the average particle diameter of the positive electrode active material increases, the energy density of the electrode can be improved.

### [Brief Description of the Drawings]

FIG. 1 is an SEM image of a positive electrode active material prepared according to Example 2.
FIG. 2 is an SEM image of a positive electrode active material prepared according to Comparative Example 1.
FIG. 3 is an SEM image of a positive electrode active material prepared according to Comparative Example 2.
FIG. 4 is an SEM image of a positive electrode active material prepared according to Comparative Example 3.

### [Mode for Carrying Out the Invention]

The terms "first," "second," "third," and the like are used herein merely to distinguish various parts, components, regions, layers, and/or sections, and are not intended to limit the present invention. These terms are used only to differentiate one part, component, region, layer, or section from another. Therefore, a "first" part, component, region, layer, or section described below may be referred to as a "second" part, component, region, layer, or section within the scope of the present invention.

The technical terms used herein are intended only to describe particular embodiments and are not intended to limit the invention. Singular expressions used herein shall include plural forms unless the context clearly indicates otherwise. The term "comprising/including/containing/having" as used in the specification specifies the presence of stated features, regions, integers, steps, operations, elements, and/or components, but does not preclude the presence or addition of one or more other features, regions, integers, steps, operations, elements, and/or components.

When a part is referred to as being "on" or "above" another part, it may be directly on or above that part, or intervening elements may be present therebetween. In contrast, when a part is referred to as being "directly on" another part, there are no intervening elements present therebetween.

Unless otherwise defined, all terms including technical and scientific terms used herein have the same meaning as commonly understood by those skilled in the art to which this invention belongs. Terms that are generally defined in commonly used dictionaries shall be interpreted as having meanings consistent with their usage in the relevant art and with the present disclosure, and shall not be interpreted in an idealized or overly formal sense unless expressly defined otherwise.

Unless otherwise specified, the symbol "%" refers to weight percent (wt%), and 1 ppm refers to 0.0001 wt%.

In this specification, the term "combinations thereof" as used in a Markush expression refers to mixtures or combinations of one or more selected components from the group described in the Markush expression, meaning that one or more of such components may be included.

Hereinafter, embodiments of the present invention will be described in detail so that those skilled in the art to which the present invention pertains can readily carry out the invention. However, the present invention may be embodied in various different forms, and is not limited to the embodiments described herein.

### 1. Positive Electrode Active Material

According to one embodiment of the present invention, there is provided a positive electrode active material for a lithium secondary battery, which is a single-particle-type nickel-containing lithium transition metal oxide, wherein the content of nickel is from 50 mol% to 70 mol% based on the total moles of transition metals, wherein the lithium transition metal oxide comprises zirconium (Zr) and yttrium (Y) as grain-growth-promoting elements, and wherein the total content of Zr and Y is from 2,500 ppm to 5,200 ppm based on the weight of the lithium transition metal oxide.

The positive electrode active material for a lithium secondary battery according to one embodiment of the present invention is a single-particle-type active material. As used herein, the term "single particle" is used to distinguish from a conventional secondary particle-type positive electrode active material in which tens to hundreds of primary particles are aggregated, and refers to a concept that includes both a single primary particle and an aggregate composed of 30 or fewer primary particles. The term "secondary particle" refers to an aggregate or secondary structure formed by the physical or chemical bonding of tens to hundreds of primary particles, even without an intentional aggregation or assembly process for the primary particles.

Compared to conventional secondary particles, single-particle-type active materials have a smaller specific surface area, which reduces gas generation caused by side reactions with the electrolyte. In addition, they exhibit higher particle strength, suppress particle fracture during electrode rolling, and minimize crack formation during repeated charge and discharge cycles. Therefore, they exhibit superior cycle life and safety compared to secondary particles and enable the realization of high energy density in electrodes.

The positive electrode active material for a lithium secondary battery according to one embodiment of the present invention has a *single-particle form.* As used herein, the term "single particle" refers to an active material particle consisting of only one primary particle, and is distinguished from aggregates composed of multiple primary particles. From the viewpoint of improving battery life and safety, such characteristics can be more favorably realized when the positive electrode active material is in the form of a single primary particle.

In the lithium transition metal oxide according to the present invention, the content of nickel is from 50 mol% to 70 mol% based on the total moles of transition metals. Recently, to increase the capacity of batteries, high-nickel active materials containing 80 mol% or more of nickel have been widely used. However, excessive nickel content may cause a *thermal propagation issue,* i.e., a problem in thermal safety, and may also increase manufacturing costs. Accordingly, in the lithium transition metal oxide according to the present invention, the nickel content is limited to 70 mol% or less, which ensures excellent thermal stability and reduces production costs. However, if the nickel content is too low, the capacity may be undesirably reduced.

In general, when manufacturing a single-particle-type positive electrode active material, calcination is conducted at higher temperatures than in the manufacture of secondary particles. In this case, over-sintering frequently occurs, leading to defects in the layered crystal structure, which results in deterioration of electrochemical properties such as capacity and output characteristics.

To overcome this, the lithium transition metal oxide according to the present invention includes zirconium (Zr) and yttrium (Y) as grain-growth-promoting elements. As a result, the calcination temperature required for forming single particles can be lowered, thereby preventing the increase in cation mixing ratio and other crystal defects caused by high-temperature calcination, while effectively increasing the crystallite size within the single particles and the average particle diameter of the single particles. As used herein, the term "crystallite" refers to a distinguishable region within a primary particle where atoms form a lattice structure in a specific orientation.

In the present invention, the total content of Zr and Y is from 2,500 ppm to 5,200 ppm based on the weight of the lithium transition metal oxide, and more specifically from 3,000 ppm to 4,100 ppm or from 3,200 ppm to 3,700 ppm. If the content of the grain-growth-promoting elements is too low, the growth of crystallite size may be insufficient. On the other hand, if the content is too high, an excessive amount of such elements may be distributed at the interface of the precursor during calcination, thereby inhibiting crystallite growth. Therefore, when the total content of Zr and Y satisfies the above range, the crystallite size can be maximized.

More specifically, the content of Zr may be from 1,300 ppm to 2,800 ppm, 1,300 ppm to 2,200 ppm, or 1,300 ppm to 1,600 ppm based on the weight of the lithium transition metal oxide. More specifically, the content of Y may be from 1,400 ppm to 2,400 ppm, 1,600 ppm to 2,300 ppm, or 1,800 ppm to 2,300 ppm based on the weight of the lithium transition metal oxide.

The content of cobalt (Co) in the lithium transition metal oxide may be from 5 mol% to 20 mol% based on the total moles of transition metals. If the cobalt content is too low, crystallite growth may be suppressed, while excessive cobalt content may lead to increased material costs.

The content of manganese (Mn) in the lithium transition metal oxide may be 10 mol% or more, and more specifically 15 mol%, 20 mol%, or 25 mol% or more, based on the total moles of transition metals. Manganese generally tends to hinder the formation of a layered structure and can suppress grain growth due to its high oxidation state. Thus, manganese content within the above range could be disadvantageous for maximizing crystallite growth in single particles. However, since the lithium transition metal oxide according to the present invention includes Zr and Y as grain-growth-promoting elements with properly controlled contents, sufficient crystallite growth can still be achieved even when manganese is included within the above range. Accordingly, advantages associated with manganese, such as improved structural stability of the active material and enhanced cycle life, can also be realized.

As the contents of the grain-growth-promoting elements and other components are appropriately controlled as described above, the positive electrode active material for a lithium secondary battery according to the present invention may have a crystallite size of 200 nm or greater, and more specifically, may be maximized to 230 nm, 250 nm, 270 nm, or 280 nm or greater. When the crystallite size of the positive electrode active material satisfies the above range, the particle strength can be improved, thereby suppressing particle fracture during rolling, and enhancing cycle life and stability. In the present specification, the term "crystallite size" may be estimated using the peak broadening of XRD data and quantitatively calculated by the Scherrer equation.

In addition, the cation mixing ratio of nickel cations in the lithium layer of the lithium transition metal oxide may be 3.8% or less, and more specifically 3.6% or 3.3% or less. When the cation mixing ratio of the positive electrode active material is sufficiently low as described above, deterioration of battery life characteristics caused by collapse of the lithium layer during charge and discharge can be prevented. In the present specification, the cation mixing ratio may be determined by dividing the intensity of the (003) peak by that of the (104) peak in the XRD (X-ray diffraction) data of the positive electrode active material.

Furthermore, the positive electrode active material for a lithium secondary battery may have an average particle diameter (D50) of 3 µm, 3.5 µm, or 4.0 µm or more. More specifically, since the lithium transition metal oxide according to the present invention contains Zr and Y as grain-growth-promoting elements, the increase in particle diameter of single particles during the calcination process can occur efficiently. When the average particle diameter of the positive electrode active material satisfies the above range, the rolling density can be increased, resulting in improved electrode energy density. In the present specification, the term "average particle diameter (D50)" refers to the particle diameter corresponding to 50% of the cumulative volume in the particle size distribution curve. The average particle diameter (D50) may be measured, for example, using a laser diffraction method.

The lithium transition metal oxide according to the present invention may be more specifically represented by the following Chemical Formula 1:

[Chemical Formula 1] Liₐ[NiₓCo_{y}Mn_{z}M_{1w1}M_{2w2}]O₂

In Chemical Formula 1, 0.8 ≤ a ≤ 1.2, 0.5 ≤ x ≤ 0.7, 0.05 ≤ y ≤ 0.2, 0.1 ≤ z ≤ 0.4, 0 < w₁ ≤ 0.05, and 0 ≤ w₂ ≤ 0.1, with x + y + z + w₁ + w₂ = 1, M₁ is Zr and Y, and M₂ is one or more selected from B, Al, Mg, Ti, Nb, W, Sc, Si, V, Fe, Y, Mo, Ce, Hf, Ta, La, and Sr.

In the lithium transition metal oxide of Chemical Formula 1, lithium is included in an amount corresponding to "a," that is, 0.8 ≤ a ≤ 1.2. If "a" is too small, the capacity may decrease, whereas if "a" is too large, the strength of the calcined positive electrode active material may increase excessively, making pulverization difficult and leading to an increase in lithium by-products, which may cause greater gas generation. Considering the improvement in capacity characteristics due to lithium content control and the sinterability balance during active material fabrication, lithium is preferably included in an amount of 0.9 ≤ a ≤ 1.1.

In the lithium transition metal oxide of Chemical Formula 1, nickel is included in an amount corresponding to "x," that is, 0.5 ≤ x ≤ 0.7. If the nickel content is too low, achieving high capacity becomes difficult; conversely, if the nickel content is too high, the structural stability of the active material may deteriorate, reducing battery cycle life and thermal safety, and increasing production cost.

Cobalt is included in an amount corresponding to "y," that is, 0.05 ≤ y ≤ 0.2. If the cobalt content is too low, crystallite growth may be inhibited and output characteristics may be degraded; if too high, manufacturing costs may increase and reversible capacity may decrease.

Manganese is included in an amount corresponding to "z," that is, 0.1 ≤ z ≤ 0.4. If the manganese content is too low, production cost may increase and active material stability may decrease; if too high, the capacity and output characteristics of the battery may deteriorate.

M₁ is included in an amount corresponding to "wi," that is, 0 < w₁ ≤ 0.05, wherein M₁ represents the grain-growth-promoting elements Zr and Y.

M₂ is included in an amount corresponding to "w₂," that is, 0 ≤ w₂ ≤ 0.1, wherein M₂ represents doping elements other than the grain-growth-promoting elements, which may be suitably added within a range that does not cause performance degradation of the battery. M₂ may be one or more selected from B, Al, Mg, Ti, Nb, W, Sc, Si, V, Fe, Y, Mo, Ce, Hf, Ta, La, Sr, or combinations thereof.

Meanwhile, the optimal contents of Zr and Y for achieving the effects of the present invention described above are more appropriate when the composition of the lithium transition metal oxide satisfies the ranges defined above; if the composition deviates from such ranges, the effects may not be properly obtained.

### 2. Method for Manufacturing Positive Electrode Active Material

According to another embodiment of the present invention, there is provided a method for manufacturing a positive electrode active material for a lithium secondary battery, comprising: preparing a transition metal precursor containing nickel in an amount of 50 mol% to 70 mol% based on the total moles of transition metals; and forming a mixture comprising the transition metal precursor, a lithium raw material, a Zr raw material, and a Y raw material, followed by calcining the mixture at a temperature of 890°C to 950°C to form a single-particle-type lithium transition metal oxide.

Hereinafter, the method for manufacturing a positive electrode active material for a lithium secondary battery according to one embodiment of the present invention will be described step by step.

First, a transition metal precursor containing nickel in an amount of 50 mol% to 70 mol% based on the total moles of transition metals is prepared.
The nickel-containing transition metal precursor is not particularly limited, and may, for example, be a transition metal hydroxide.

The transition metal hydroxide may be produced, for example, by adding a chelating agent-containing solution and a pH-controlling solution to a transition-metal-containing solution including a nickel raw material and, optionally, a cobalt raw material and/or a manganese raw material, to induce a co-precipitation reaction.

The nickel raw material is not particularly limited as long as it is one commonly used in the art for the preparation of positive electrode active material precursors. Examples include nickel-containing sulfates, acetates, nitrates, halides, sulfides, hydroxides, oxides, or oxyhydroxides. Specifically, examples may include NiSO₄, NiSO₄·6H₂O, Ni(OH)₂, NiO, NiOOH, NiCO₃·2Ni(OH)₂·4H₂O, NiC₂O₂-2H₂O, Ni(NO₃)₂·6H₂O, fatty acid nickel salts, nickel halides, or combinations thereof, but are not limited thereto.

The cobalt raw material is also not particularly limited and may be any material conventionally used for preparing positive electrode active material precursors. Examples include cobalt-containing sulfates, acetates, nitrates, halides, sulfides, hydroxides, oxides, or oxyhydroxides, such as CoSO₄, CoSO₄·7H₂O, Co(OH)₂, CoOOH, Co(OCOCH₃)₂·4H₂O, Co(NO₃)₂·6H₂O, or combinations thereof, but are not limited thereto.

The manganese raw material is also not particularly limited as long as it is commonly used in the art for preparing positive electrode active material precursors. Examples include manganese-containing sulfates, acetates, nitrates, halides, sulfides, hydroxides, oxides, or oxyhydroxides. Specifically, examples include MnSO₄, MnCO₃, Mn(NO₃)₂, manganese acetate, manganese dicarboxylate salts, manganese citrate, manganese fatty acid salts, Mn₂O₃, MnO₂, and Mn₃O₄, manganese oxyhydroxides, manganese chlorides, or combinations thereof, but are not limited thereto.

The transition-metal-containing solution may be prepared by adding the nickel raw material and optionally the cobalt and/or manganese raw materials to a solvent such as water or a mixed solvent of water and an organic solvent that is miscible therewith (for example, an alcohol).

The chelating agent-containing solution functions to form complexes, and the chelating agent may include, for example, NH₃, NH₄OH, (NH₄)₂SO₄, NH₄NO₃, NH₄Cl, CH₃COONH₄, NH₄CO₃, or combinations thereof, but is not limited thereto. The chelating agent-containing solution may be used in the form of an aqueous solution, in which case the solvent may be water or a mixture of water and an organic solvent miscible therewith (for example, an alcohol).

By adjusting the concentrations of the nickel, cobalt, and manganese raw materials, the molar ratios of Ni, Co, and Mn in the precursor can be controlled. Accordingly, the content of nickel in the transition metal precursor may be 50 mol% to 70 mol% based on the total moles of transition metals.

The content of cobalt in the transition metal precursor may be 5 mol% to 20 mol%, and the content of manganese may be 10 mol% or more, and more specifically 15 mol%, 20 mol%, or 25 mol% or more, based on the total moles of transition metals.

The technical significance of adjusting the contents of nickel, cobalt, and manganese in the transition metal precursor is as described above in connection with the composition of the lithium transition metal oxide and therefore will not be repeated here.

Next, a mixture comprising the transition metal precursor, a lithium raw material, a Zr raw material, and a Y raw material is formed, followed by calcining the mixture at a temperature of 890°C to 950°C to form a single-particle-type lithium transition metal oxide.

The lithium raw material is not particularly limited as long as it is commonly used in the art; more specifically, it may be, for example, Li₂CO₃. By using Li₂CO₃, which is less expensive than the commonly used LiOH, cost reduction can be achieved.

The Zr raw material may be Zr(SO₄)₂, ZrS₂, ZrO₂, Zr(NO₃)₄, or a combination thereof, but is not limited thereto.

The Y raw material may be Y(SO₄)₂, Y₂(SO₄)₃, Y₂O₃, Y(NO₃)₃, or a combination thereof, but is not limited thereto.

The calcination is performed at a temperature of 890°C to 950°C. If the calcination temperature is too low, the crystallite growth within the single particles and the increase in average particle diameter may be insufficient. Conversely, if the calcination temperature is too high, over-sintering may occur, leading to an increase in cation mixing ratio and the formation of crystal defects.

The calcination may be conducted for 5 to 20 hours, and more specifically for 7 to 15 hours.

The calcination may also be performed in an oxygen or air atmosphere. When calcined under such an atmosphere, the local oxygen partial pressure increases, thereby improving the crystallinity of the positive electrode active material.

In the formed lithium transition metal oxide, the total content of Zr and Y may be from 2,500 ppm to 5,200 ppm, and more specifically from 3,000 ppm to 4,100 ppm or from 3,200 ppm to 3,700 ppm, based on the weight of the lithium transition metal oxide.

The content of Zr in the formed lithium transition metal oxide may be from 1,300 ppm to 2,800 ppm, and more specifically from 1,300 ppm to 2,200 ppm or from 1,300 ppm to 1,600 ppm, based on the weight of the lithium transition metal oxide.

The content of Y in the formed lithium transition metal oxide may be from 1,400 ppm to 2,400 ppm, and more specifically from 1,600 ppm to 2,300 ppm or from 1,800 ppm to 2,300 ppm, based on the weight of the lithium transition metal oxide.

The technical significance of controlling the contents of Zr and Y in the lithium transition metal oxide is as previously described and will therefore not be repeated here.

Meanwhile, when doping elements other than the grain-growth-promoting elements are additionally introduced, corresponding doping source materials may be further added to the mixture during its formation, and such elements may be incorporated into the lithium transition metal oxide through the calcination process.

Next, if necessary, the lithium transition metal oxide may be optionally pulverized (crushed). Through this process, the formation of the single-particle-type lithium transition metal oxide can be further facilitated. The pulverization may be carried out using methods commonly employed in the art. For example, it may be performed using a jet mill, although the method is not limited thereto.

### 3. Lithium Secondary Battery

According to another embodiment of the present invention, there is provided a positive electrode for a lithium secondary battery comprising the above-described positive electrode active material.

More specifically, the positive electrode may include a positive electrode current collector and a positive electrode active material layer disposed on the positive electrode current collector, wherein the positive electrode active material layer comprises the above-described positive electrode active material.

The positive electrode current collector is not particularly limited as long as it has conductivity without causing chemical changes in the battery. Examples include stainless steel, aluminum, nickel, titanium, sintered carbon, or aluminum or stainless-steel surface-treated with carbon, nickel, titanium, or silver. The positive electrode current collector typically has a thickness of 3 to 500 µm, and fine irregularities may be formed on its surface to enhance adhesion with the positive electrode active material. It may be used in various forms such as film, sheet, foil, net, porous body, foam, or non-woven fabric.

The positive electrode active material layer may include, in addition to the above-described positive electrode active material, a binder and/or conductive material.

The binder serves to improve adhesion between the positive electrode active material particles and between the active material and the current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof. One or more of these materials may be used, and the binder may be included in an amount of 1 to 30 wt% based on the total weight of the positive electrode active material layer.

The conductive material is used to impart conductivity to the electrode and is not particularly limited as long as it has electronic conductivity without causing chemical changes in the battery. Examples include graphite such as natural or artificial graphite; carbon-based materials such as carbon black, acetylene black, ketjen black, channel black, furnace black, lamp black, thermal black, and carbon fibers; metal powders or fibers such as copper, nickel, aluminum, or silver; conductive whiskers such as zinc oxide or potassium titanate; conductive metal oxides such as titanium oxide; or conductive polymers such as polyphenylene derivatives. One or more of these materials may be used, and the conductive material may be included in an amount of 1 to 30 wt% based on the total weight of the positive electrode active material layer.

The positive electrode can be manufactured according to a conventional method for preparing a positive electrode, except for using the above-described positive electrode active material.

Specifically, the positive electrode may be prepared by applying a composition for forming a positive electrode active material layer, which includes the above-described positive electrode active material and, optionally, a binder, a conductive material, and a solvent, onto the positive electrode current collector, followed by drying and rolling. The types and amounts of the positive electrode active material, binder, and conductive material are as described above.

The solvent may be any commonly used solvent in the art, such as dimethyl sulfoxide (DMSO), isopropyl alcohol, N-methylpyrrolidone (NMP), acetone, or water, and one or more of these may be used. The amount of the solvent used is sufficient to dissolve or disperse the positive electrode active material, conductive material, and binder, and to provide a viscosity suitable for ensuring excellent coating uniformity of the slurry during electrode manufacturing.

Alternatively, the positive electrode may be manufactured by casting the composition for forming the positive electrode active material layer onto a separate support, peeling off the resulting film, and then laminating it onto the positive electrode current collector.

According to another embodiment of the present invention, there is provided a lithium secondary battery comprising the above-described positive electrode for a lithium secondary battery.

More specifically, the lithium secondary battery may include a positive electrode, a negative electrode, a separator, and an electrolyte.

The lithium secondary battery may further include a battery container housing an electrode assembly composed of the positive electrode, negative electrode, and separator, and a sealing member for sealing the battery container.

The negative electrode may include a negative electrode current collector and a negative electrode active material layer disposed thereon.

The negative electrode current collector is not particularly limited as long as it exhibits high conductivity without causing chemical reactions in the battery. Examples include copper, stainless steel, aluminum, nickel, titanium, sintered carbon, or copper and stainless-steel surfaces treated with carbon, nickel, titanium, or silver, or an aluminum-cadmium alloy. The negative electrode current collector typically has a thickness of 3 to 500 µm, and, like the positive electrode current collector, may have fine irregularities formed on its surface to enhance adhesion with the negative electrode active material. It may be used in various forms such as film, sheet, foil, net, porous body, foam, or non-woven fabric.

The negative electrode active material layer may include a negative electrode active material, and optionally a binder and conductive material. The layer may be formed by coating the negative electrode current collector with a composition including the negative electrode active material and, optionally, the binder and conductive material, followed by drying, or by casting the composition onto a separate support, peeling off the resulting film, and laminating it onto the current collector.

As the negative electrode active material, a compound capable of reversible intercalation and deintercalation of lithium may be used. Specific examples include carbon-based materials such as artificial graphite, natural graphite, graphitized carbon fibers, or amorphous carbon; metal-based compounds capable of alloying with lithium such as Si, Al, Sn, Pb, Zn, Bi, In, Mg, Ga, Cd, Si alloys, Sn alloys, or Al alloys; metal oxides capable of doping and dedoping lithium such as SiOβ (0 < β < 2), SnO₂, vanadium oxide, and lithium vanadium oxide; or composite materials containing both metal compounds and carbon materials, such as Si-C composites or Sn-C composites. One or more of these materials may be used, and additionally, a metallic lithium thin film may also be used as the negative electrode active material.

The carbon material may include both low-crystallinity carbon and high-crystallinity carbon. Representative examples of low-crystallinity carbon include soft carbon and hard carbon, and representative examples of high-crystallinity carbon include natural graphite, artificial graphite, Kish graphite, pyrolytic carbon, mesophase pitch-based carbon fiber, meso-carbon microbeads, mesophase pitch, and petroleum or coal tar pitch-derived cokes, which are high-temperature-fired carbon materials having amorphous, flaky, platelet, spherical, or fibrous forms.

The binder and conductive material used in the negative electrode may be the same as those described above for the positive electrode.

The separator serves to separate the positive electrode and the negative electrode and to provide a pathway for lithium-ion movement. Any separator commonly used in lithium secondary batteries may be employed without particular limitation, and it is particularly preferable that the separator exhibit low resistance to ion migration and excellent electrolyte wettability. Specifically, a porous polymer film may be used, such as a polyolefin-based polymer film made of an ethylene homopolymer, propylene homopolymer, ethylene/butene copolymer, ethylene/hexene copolymer, or ethylene/methacrylate copolymer, or a multilayer structure including two or more of these films. In addition, a conventional porous non-woven fabric, such as one made of high-melting-point glass fibers or polyethylene terephthalate fibers, may also be used. Furthermore, to ensure heat resistance or mechanical strength, coated separators containing ceramic components or polymer materials may also be employed, in either single-layer or multi-layer configurations.

The electrolyte may include an organic liquid electrolyte, inorganic liquid electrolyte, solid polymer electrolyte, gel-type polymer electrolyte, solid inorganic electrolyte, or molten inorganic electrolyte, without being limited thereto.

Specifically, the organic liquid electrolyte may include an organic solvent and a lithium salt.

The organic solvent is not particularly limited as long as it serves as a medium through which ions involved in the electrochemical reactions of the battery can move. Examples of suitable organic solvents include ester-based solvents such as *methyl acetate, ethyl acetate, γ-butyrolactone*, *and e-caprolactone*; ether-based solvents such as *dibutyl ether* or *tetrahydrofuran*; ketone-based solvents such as *cyclohexanone;* aromatic hydrocarbon solvents such as *benzene* or *fluorobenzene;* carbonate-based solvents such as *dimethyl carbonate (DMC), diethyl carbonate (DEC), methylethyl carbonate (MEC), ethylmethyl carbonate (EMC), ethylene carbonate (EC),* and *propylene carbonate (PC);* alcohol-based solvents such as *ethanol* and *isopropyl alcohol;* nitrile-based solvents such as *R-CN* (where R is a linear, branched, or cyclic hydrocarbon group having 2 to 20 carbon atoms, which may include an aromatic or ether linkage); amide-based solvents such as *dimethylformamide*; dioxolane-based solvents such as *1,3-dioxolane*; or sulfolane-based solvents.

Among these, carbonate-based solvents are preferred, and particularly, a mixture of a cyclic carbonate having high ionic conductivity and high dielectric constant (e.g., *ethylene carbonate* or *propylene carbonate)* and a linear carbonate with low viscosity (e.g., *ethylmethyl carbonate, dimethyl carbonate,* or *diethyl carbonate)* is more preferred. In this case, the cyclic carbonate and linear carbonate may be mixed in a volume ratio of about 1:1 to about 1:9, which enables the electrolyte to exhibit excellent performance.

The lithium salt is not particularly limited as long as it can supply lithium ions for use in a lithium secondary battery. Specific examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The concentration of the lithium salt is preferably within the range of 0.1 to 2.0 M. When the lithium salt concentration is within this range, the electrolyte exhibits suitable conductivity and viscosity, thus ensuring excellent electrolyte performance and effective migration of lithium ions.

In addition to the basic components, the electrolyte may further include one or more additives to improve battery performance, such as enhancing cycle life, suppressing capacity fading, or increasing discharge capacity. Examples of such additives include haloalkylene carbonate compounds such as *difluoroethylene carbonate,* pyridine, triethyl phosphate, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride (AlCl₃). The additive may be included in an amount of 0.1 to 5 wt% based on the total weight of the electrolyte.

Because the lithium secondary battery according to the present invention includes the above-described positive electrode active material, it exhibits excellent discharge capacity, output characteristics, and capacity retention, making it highly suitable for use in portable electronic devices such as mobile phones, notebook computers, and digital cameras, as well as in electric vehicle applications such as hybrid electric vehicles (HEVs).

Accordingly, another embodiment of the present invention provides a battery module comprising one or more unit cells of the lithium secondary battery and a battery pack including the battery module.

The battery module or battery pack may be used as a power source for power tools, electric vehicles (EVs), hybrid electric vehicles (HEVs), plug-in hybrid electric vehicles (PHEVs), or energy storage systems (ESS) for medium- or large-scale power applications.

Hereinafter, embodiments of the present invention will be described in further detail through examples. However, the following examples are provided merely for illustrative purposes and are not intended to limit the scope of the present invention.

### Example 1

### (1) Preparation of Positive Electrode Active Material

### (Mixing)

A precursor having a composition of Ni_{0.6}Co_{0.1}Mn_{0.3}(OH)₂ was prepared. Subsequently, Li₂CO₃ was added such that the molar ratio of lithium to the transition metals (Li/M) was 1.05, ZrO₂ was added such that the weight ratio (wt%) of Zr to the lithium transition metal oxide was 2,700 ppm, and Y₂O₃ was added such that the weight ratio (wt%) of Y to the lithium transition metal oxide was 2,100 ppm. These materials were charged into a mixer and mechanically mixed to form a homogeneous mixture.

### (Calcination)

The resulting mixture was calcined in an oxygen atmosphere at 940°C for 13 hours, followed by natural cooling. The calcined product was then crushed to obtain a single-particle-type lithium transition metal oxide.

### (2) Fabrication of Lithium Secondary Battery

A slurry for electrode fabrication was prepared by mixing the positive electrode active material, conductive material, and binder at a weight ratio of 95.0 : 2.0 : 3.0 wt%, respectively, using carbon black (Denka Black) as the conductive material and polyvinylidene fluoride (PVDF, KF9700) as the binder. N-Methyl-2-pyrrolidone (NMP) was added to adjust the viscosity such that the solid content was about 60 wt%. The resulting slurry was coated onto an aluminum foil (20 µm thick) using a doctor blade, and then dried and rolled. The electrode loading amount was 16.0 mg/cm², and the rolling density (measured at 25°C under 20 kN pressure) was 3.5 g/cm³.

As the electrolyte, a solution of 1 M LiPF₆ in EC:DMC:DEC = 1:2:1 (vol%) was used, with 2.0 vol% vinylene carbonate (VC) added to the total electrolyte volume. A polypropylene (PP) separator and a lithium metal negative electrode (400 µm, NEBA Metal) were used to fabricate a coin-type lithium secondary cell.

### Comparative Examples, Other Examples, and Reference Examples

Except that the input amounts of ZrO₂ and Y₂O₃ were adjusted such that the contents of doped Zr and Y were controlled as shown in Table 1 below, the positive electrode active materials and lithium secondary batteries were prepared in the same manner as in Example 1.

**[Table 1]**

| | Li/M Ratio | Calcination Temperature (°C) | Calcination Time (h) | Zr Doping Amount (ppm) | Y Doping Amount (ppm) |
|---|---|---|---|---|---|
| Example 1 | 1.05 | 940 | 13 | 2700 | 2100 |
| Example 2 | 1.05 | 940 | 13 | 1400 | 2100 |
| Example 3 | 1.05 | 940 | 13 | 1400 | 1800 |
| Example 4 | 1.05 | 940 | 13 | 2700 | 1400 |
| Comparative example 1 | 1.05 | 940 | 13 | 0 | 0 |
| Comparative example 2 | 1.05 | 940 | 13 | 0 | 2800 |
| Comparative example 3 | 1.05 | 940 | 13 | 5400 | 0 |
| Comparative example 4 | 1.05 | 940 | 13 | 1400 | 1000 |
| Comparative example 5 | 1.05 | 940 | 13 | 1400 | 0 |

### Experimental Example 1: Observation of SEM Images of Positive Electrode Active Materials

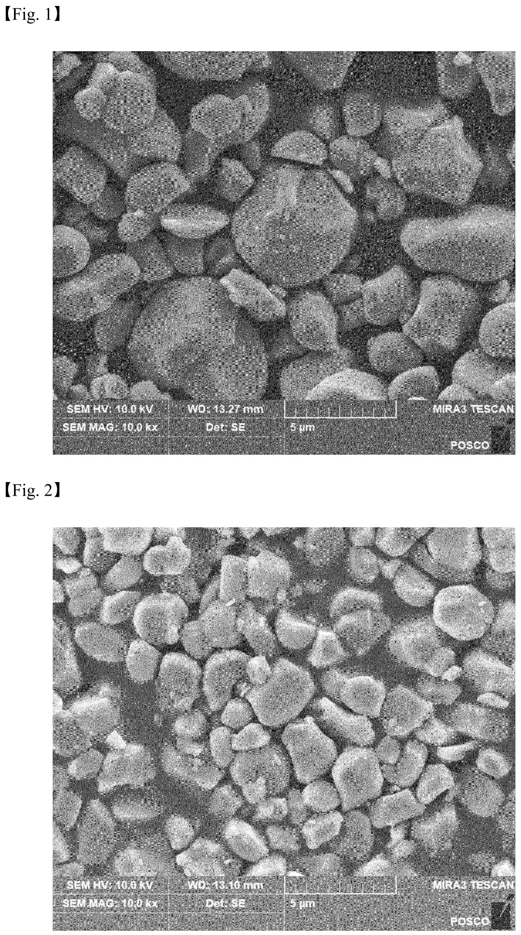

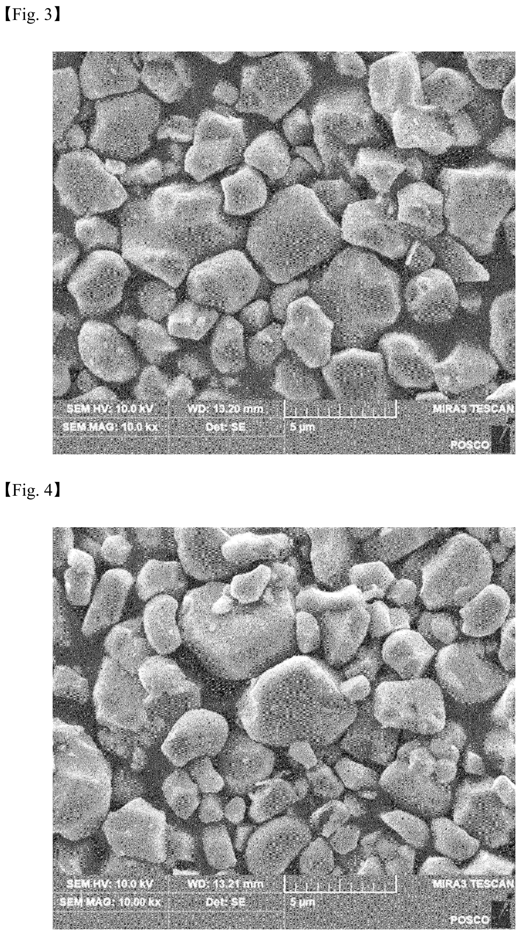

The surface morphologies of the positive electrode active materials prepared according to Example 2, Comparative Example 1, Comparative Example 2, and Comparative Example 3 were evaluated using Scanning Electron Microscopy (SEM), and the corresponding SEM images are shown in FIGS. 1 to 4, respectively.

Referring to FIGS. 1 to 4, it was confirmed that the positive electrode active materials of both the Examples and the Comparative Examples exhibited a single-particle morphology.

### Experimental Example 2: Evaluation of Physical Properties of Positive Electrode Active Materials

The physical properties of the positive electrode active materials prepared according to the Examples, Comparative Examples, and Reference Examples were evaluated, and the results are summarized in Table 2 below.

### (1) Evaluation of Average Particle Diameter (D50)

For the positive electrode active materials prepared according to the Examples and Comparative Examples, the average particle diameter (D50) corresponding to 50% of the cumulative particle volume was measured using the laser diffraction method.

### (2) Evaluation of Crystallite Size

For the positive electrode active materials prepared according to the Examples and Comparative Examples, the crystallite size was quantitatively calculated from the peak broadening in the XRD data using the Scherrer equation.

### (3) Evaluation of Cation Mixing Ratio

For the positive electrode active materials prepared according to the Examples and Comparative Examples, the cation mixing ratio was measured by dividing the intensity of the (003) peak by the intensity of the (104) peak in the XRD (X-ray diffraction) data of the positive electrode active material.

**[Table 2]**

| | Average Particle Diameter (D50, µm) | Cation Mixing Ratio (%) | Crystallite Size (nm) |
|---|---|---|---|
| Example 1 | 4.3 | 3.2 | 298 |
| Example 2 | 4.3 | 2.8 | 307 |
| Example 3 | 4.3 | 3.3 | 281 |
| Example 4 | 4.4 | 3.3 | 285 |
| Comparative example 1 | 3.8 | 3.4 | 266 |
| Comparative example 2 | 3.8 | 3.4 | 268 |
| Comparative example 3 | 3.9 | 3.6 | 273 |
| Comparative example 4 | 4.1 | 3.4 | 269 |
| Comparative example 5 | 3.8 | 3.4 | 277 |

Referring to Table 2, it was confirmed that in Examples 1 to 4, in which both Zr and Y were doped and their contents were appropriately controlled, the positive electrode active materials exhibited a sufficiently large average particle diameter, a low cation mixing ratio, and a large crystallite size overall.

In contrast, in Comparative Example 1, where neither Zr nor Y was doped, and in Comparative Examples 2, 3, and 5, where only one of Zr or Y was doped, the average particle diameter was relatively smaller, the cation mixing ratio was higher, and the crystallite size was smaller.

Furthermore, in Comparative Example 4, in which both Zr and Y were doped but the Y doping amount was too low, the average particle diameter was also inferior, the cation mixing ratio was large, and the crystallite size was small.

While the preferred embodiments of the present invention have been described above, the present invention is not limited thereto, and various modifications may be made within the scope of the appended claims, the detailed description of the invention, and the accompanying drawings, all of which are intended to fall within the scope of the present invention.

Accordingly, the substantial scope of the present invention shall be defined by the appended claims and their equivalents.

## Claims

1. A positive electrode active material for a lithium secondary battery, which is a single-particle-type nickel-containing lithium transition metal oxide,
wherein the content of nickel is from 50 mol% to 70 mol% based on the total moles of transition metals,
wherein the lithium transition metal oxide comprises zirconium (Zr) and yttrium (Y) as grain-growth-promoting elements, and
wherein the total content of Zr and Y is from 2,500 ppm to 5,200 ppm based on the weight of the lithium transition metal oxide.

2. The positive electrode active material for a lithium secondary battery of claim 1,
wherein the content of Zr is from 1,300 ppm to 2,800 ppm based on the weight of the lithium transition metal oxide.

3. The positive electrode active material for a lithium secondary battery of claim 1,
wherein the content of Y is from 1,400 ppm to 2,400 ppm based on the weight of the lithium transition metal oxide.

4. The positive electrode active material for a lithium secondary battery of claim 1,
wherein the content of cobalt (Co) in the lithium transition metal oxide is from 5 mol% to 20 mol% based on the total moles of transition metals.

5. The positive electrode active material for a lithium secondary battery of claim 1,
wherein the content of manganese (Mn) in the lithium transition metal oxide is 10 mol% or more based on the total moles of transition metals.

6. The positive electrode active material for a lithium secondary battery of claim 1,
wherein a crystallite size of the lithium transition metal oxide is 200 nm or more.

7. The positive electrode active material for a lithium secondary battery of claim 1,
wherein a cation-mixing ratio of nickel cations in a lithium layer of the lithium transition metal oxide is 3.8% or less.

8. The positive electrode active material for a lithium secondary battery of claim 1,
wherein an average particle diameter (D50) of the lithium transition metal oxide is 3 µm or more.

9. The positive electrode active material for a lithium secondary battery of claim 1,
wherein the lithium transition metal oxide is represented by Chemical Formula 1 below:
[Chemical Formula 1] Liₐ[NiₓCo_{y}Mn_{z}M_{1w1}M_{2w2}]O₂
wherein 0.8 ≤ a ≤ 1.2, 0.5 ≤ x ≤ 0.7, 0.05 ≤ y ≤ 0.2, 0.1 ≤ z ≤ 0.4, 0 < w₁ ≤ 0.05, 0 ≤ w₂ ≤ 0.1, and x + y + z + w₁ + w₂ = 1,
M₁ is Zr and Y, and
M₂ is one or more selected from B, Al, Mg, Ti, Nb, W, Sc, Si, V, Fe, Y, Mo, Ce, Hf, Ta, La, and Sr.

10. A method for manufacturing a positive electrode active material for a lithium secondary battery, comprising:
preparing a transition-metal precursor containing nickel in an amount of from 50 mol% to 70 mol% based on the total moles of transition metals; and
forming a mixture comprising the transition-metal precursor, a lithium raw material, a Zr raw material, and a Y raw material, followed by calcining the mixture at a temperature of 890°C to 950 °C to form a single-particle-type lithium transition metal oxide.

11. The method for manufacturing a positive electrode active material for a lithium secondary battery of claim 10,
wherein the total content of Zr and Y in the formed lithium transition metal oxide is from 2,500 ppm to 5,200 ppm based on the weight of the lithium transition metal oxide.

12. The method for manufacturing a positive electrode active material for a lithium secondary battery of claim 10,
wherein the content of Zr in the formed lithium transition metal oxide is from 1,300 ppm to 2,800 ppm based on the weight of the lithium transition metal oxide.

13. The method for manufacturing a positive electrode active material for a lithium secondary battery of claim 10,
wherein the content of Y in the formed lithium transition metal oxide is from 1,400 ppm to 2,400 ppm based on the weight of the lithium transition metal oxide.

14. The method for manufacturing a positive electrode active material for a lithium secondary battery of claim 10,
wherein the lithium raw material is Li₂CO₃.

15. A positive electrode for a lithium secondary battery, comprising the positive electrode active material according to any one of claims 1 to 9.

16. A lithium secondary battery comprising the positive electrode according to claim 15.
